# EUROPEAN PATENT APPLICATION

(11) **EP 4 529 189 A1**
(43) Date of publication of application: **26.03.2025**
(21) Application number: 23830196.4
(22) Date of filing: 26.06.2023
(51) Int. Cl.: H04N 21/431

(54) **AUDIO PUBLISHING METHOD AND APPARATUS, AND COMPUTER-READABLE STORAGE MEDIUM**

(30) Priority: 01.07.2022 CN 202210767916
(71) Applicant: Douyin Vision (Beijing) Co., Ltd., Beijing 100041 (CN)
(72) Inventor: LI, Xinyi, Beijing 100028 (CN); LI, Jiarong, Beijing 100028 (CN); LI, Yujie, Beijing 100028 (CN)
(74) Representative: Dentons UK and Middle East LLP
(86) International application number: PCT/CN2023/102468
(87) International publication number: WO 2024/002019

(57) **Abstract**

The present invention discloses an audio publishing method, apparatus and computer-readable storage medium, which relates to the technical field of terminals. The audio publishing method includes: acquiring an original audio file; generating visual content for an audio clip corresponding to clipping information of the original audio file in response to the clipping information inputted by a user, wherein the visual content is provided with a Redirect-to control for redirecting to the original audio file; and publishing the visual content for the audio clip into a feed in response to a publishing operation of the user.

## Description

### CROSS-REFERENCE TO RELATED APPLICATIONS

This application is based on the application with a CN application number of 202210767916.4 and the filing date being on July 1, 2022, and claims its priority. The disclosure of this CN application as a whole is incorporated into the present application herein by reference.

### TECHNICAL FIELD

The present disclosure relates to the technical field of terminals, and in particular, to an audio publishing method, an apparatus and a computer-readable storage medium.

### BACKGROUND

Currently, there are some websites or applications that aggregate audio contents, such as news, stories, speeches, work reviews, and so on. These audio contents tend to have long playback durations. Users usually select audios of interest based on information such as titles and classifications of the audio contents.

### SUMMARY

According to a first aspect of some embodiments of the present invention, an audio publishing method is provided, comprising: acquiring an original audio file; generating visual content for an audio clip corresponding to clipping information of the original audio file in response to the clipping information inputted by a user, wherein the visual content is provided with a Redirect-to control for redirecting to the original audio file; and publishing the visual content for the audio clip into a feed in response to a publishing operation of the user.

In some embodiment, the audio publishing method further comprises: displaying a preview of the visual content for the audio clip before the publishing of the visual content for the audio clip.

In some embodiment, the visual content further comprises description information of the audio clip.

In some embodiment, the description information of the audio clip comprises at least one of a title, a cover image, or a text description.

In some embodiment, generating visual content for an audio clip corresponding to clipping information comprises: obtaining description information of the original audio file through a RSS feed link input by the user, wherein the original audio file is obtained through the RSS feed link; displaying one or more input controls, each input control comprising the description information of the original audio file; and generating the visual content for the original audio file according to the clipping information and the description information of the original audio file.

In some embodiment, generating visual content for an audio clip corresponding to clipping information comprises: generating a background color for the visual content based on a cover image in the case that the description information comprises the cover image.

In some embodiment, generating visual content for an audio clip corresponding to clipping information comprises: generating an animation effect of the visual content.

In some embodiment, the animation effect is associated with a change in an audio attribute of the audio clip.

In some embodiment, the visual content is further provided with user interaction control(s).

In some embodiment, acquiring an original audio file comprises: displaying an upload page in response to an operation on a Create control of the user, wherein the upload page comprises a Video Upload control and an Audio Upload control; displaying an audio upload interface in response to a selection on the Audio Upload control of the user; and acquiring the original audio file through the upload interface.

In some embodiment, the audio upload interface comprises an input box for an RSS feed link to obtain the original audio file.

In some embodiment, the feed is a short video feed, and the audio publishing method further comprises: publishing the original audio file into an audio feed.

In some embodiment, generating visual content for an audio clip corresponding to clipping information of the original audio file in response to the clipping information is input by a user comprises: displaying an audio clip editing interface in response to the user starting to edit the audio clip, wherein the audio clip editing interface comprises a track area of the original audio file, a first movement control, and a second movement control, and the first movement control and the second movement control are respectively used to identify a start position and an end position of the audio clip in the track area; using playback time points corresponding to the first movement control and the second movement control as the clipping information of the original audio file in response to the user accomplishing editing the audio clip; and generating the visual content for the audio clip according to the clipping information.

According to a second aspect of some embodiments of the present invention, an audio publishing apparatus is provided, including: an acquisition module, configured to acquire an original audio file; a generation module, configured to in response to clipping information of the original audio file input by a user, generate visual content for an audio clip corresponding to the clipping information, wherein the visual content is provided with a Redirect-to control for redirecting to the original audio file; a publishing module, configured to in response to a publishing operation of the user, publish the visual content for the audio clip into a feed.

According to a third aspect of some embodiments of the present invention, an audio publishing apparatus is provided, including: a memory; a processor coupled to the memory, the processor configured to, based on instructions stored in the memory, carry out any one of the foregoing audio publishing methods.

According to a fourth aspect of some embodiments of the present invention, a computer-readable storage medium is provided on which a computer program is stored, which executed by a processor, implement any one of the foregoing audio publishing methods.

According to a fifth aspect of some embodiments of the present invention, a computer program product is provided, which when executed on a computer causes the computer to implement any one of the foregoing audio publishing methods.

According to a sixth aspect of some embodiments of the present invention, a computer program is provided, including: instructions which when by executed by a processor cause the processor to implement any one of the foregoing audio publishing methods.

Other features and advantages of the present invention will become apparent from the following detailed description of exemplary embodiments of the present invention with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present invention. For a person skilled in the art, he or she may also acquire other drawings according to such drawings on the premise that no inventive effort is involved.
FIG. 1 shows a schematic flowchart of an audio publishing method according to some embodiments of the present invention;
FIG. 2 shows a schematic diagram of an Edit interface of an audio clip;
FIG. 3 shows a schematic diagram of an Upload page;
FIG. 4 shows a schematic diagram of a Create interface of an audio clip;
FIG. 5 shows a schematic structural diagram of an audio publishing apparatus according to some embodiments of the present invention;
FIG. 6 shows a schematic structural diagram of an audio publishing apparatus according to other embodiments of the present invention;
FIG. 7 shows a schematic structural diagram of an audio publishing apparatus according to still other embodiments of the present invention.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

After analyzing the related art, the inventors have found that, for the current audio playback mode, a listener usually listens from the start of the audio if he/she does not know much about the specific contents of an audio product. However, for a long audio file having scattered information and a long foreshadowing part, some users may lose interest before listening to the exciting part. Therefore, users will miss some wonderful audio contents, and it is difficult for audio creators to guide more users to listen to their works.

The present invention provides an audio publishing method, apparatus and computer storage medium to address the problem of low efficiency of information acquisition for listeners due to the limited approach to access of audio content playback in the related art.

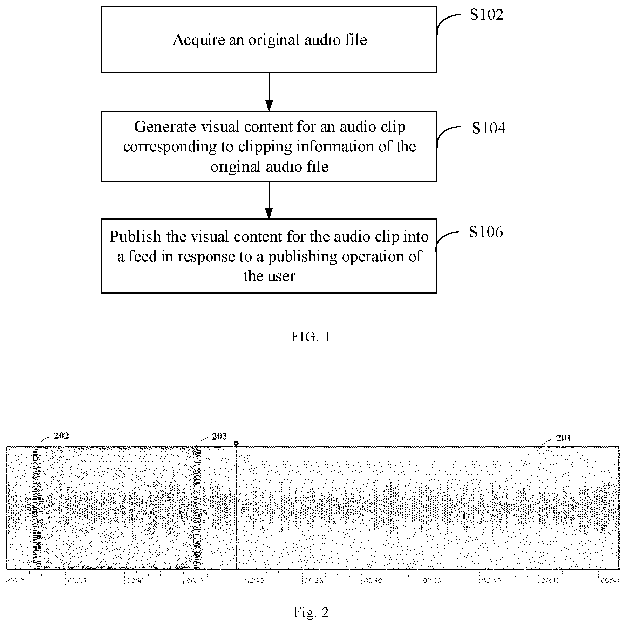

FIG. 1 shows a schematic flowchart of an audio publishing method according to some embodiments of the present invention. As shown in FIG. 1, the audio publishing method of this embodiment comprises steps S102 to S106.

In step S102, an original audio file is acquired.

The original audio file is, for example, uploaded locally by a user from a terminal or acquired from the network. The manner of network acquisition comprises, for example, acquisition from a cloud, or acquisition through an RSS (Really Simple Syndication) feed link input by a user.

In step S104, visual content for an audio clip corresponding to clipping information of the original audio file is generated in response to the clipping information inputted by a user, wherein the visual content is provided with a Redirect-to control for redirecting to the original audio file.

The clipping information is used to identify a start point and an end point of the audio clip that the user wants to cut out. For example, the clipping information comprises a start time point and an end time point of the audio clip, or a start time point and a duration of the audio clip, or an end time point and a duration of the audio clip, etc.

In some embodiments, the user may enter numerical values and symbols of the clipping information through an input box.

In some embodiments, the user determines the clipping information by controlling some movement controls in an audio track area of the original audio file, wherein the movement controls are used to identify the start and end positions of the audio clip.

In some embodiments, an audio clip editing interface is displayed in response to the user starting to edit the audio clip, wherein the audio clip editing interface comprises a track area of the original audio file, a first movement control, and a second movement control, and the first movement control and the second movement control are respectively used to identify a start position and an end position of the audio clip in the track area; playback time points corresponding to the first movement control and the second movement control are used as the clipping information of the original audio file in response to the user accomplishing editing the audio clip. FIG. 2 shows a schematic diagram of an Edit interface of an audio clip. As shown in FIG. 2, a rectangular frame is covered over an audio track area 201, wherein the left edge of the rectangular frame is a first movement control 201, and the right edge is a second movement control 202. A user can make an adjustment by moving the first movement control 201 and the second movement control 202, and the area covered by the rectangular frame corresponds to an audio clip cut out from the original audio file.

After the user operates the movement controls, corresponding time points can be displayed on the interface. The user can also edit the displayed time points to change the positions of the movement controls on the track area.

The visual content may be video content, or may be multimedia content with a playback effect similar to that of video, for example, multimedia content comprising a dynamic image and an audio file that are played simultaneously. A Redirect-to control can be deployed in the playback interface of the visual content.

In some embodiments, the visual content comprises description information of the audio clip. The description information comprises, for example, at least one of a title, a cover image, or a text description. In addition, a background, an animation effect or the like can be generated for the visual content. The information, background, animation or other objects can be automatically generated or edited by the publisher. These objects are then composited with the audio clip to generate the visual content.

In some embodiments, a preview of the visual content for the audio clip is displayed before the publishing of the audio clip's visual content. Thus, the publisher can adjust the audio clip or other objects used to generate the visual content according to the preview effect.

In step S106, the visual content for the audio clip is published into a feed in response to a publishing operation of the user.

The feed comprises multiple multimedia contents. A viewer can watch the multiple multimedia contents in the feed in sequence through a switching operation. The multimedia contents comprises, for example, videos, audios, and the like.

Through the above embodiment, a creator can select and publish a part of the original audio file, for example, the most attractive and highlight part of the original audio file. Therefore, when a viewer browses the visual content corresponding to the audio clip, it is easier for the viewer to quickly understand the content of the complete original audio file, and can be redirected to a playback interface of the original audio file when interested. Therefore, the above embodiment provides an additional approach to audio access and playback, which can improve the information acquisition efficiency of visitors, and can increase the click-through rate of a creator's audio file. Moreover, the above embodiment can realize automatic generation of the visual content without the need of the user's complex video production operations, thereby improving the efficiency of publishing the user-created content, and having wide applicability.

In some embodiments, the feed comprises a short video feed and an audio feed. In response to a publishing operation of the user, the visual content for the audio clip can be published into a short video feed, and the original audio file can be published into an audio feed. A short video feed is a feed making it more convenient for viewers to obtain information, which comprises multiple short videos and visual contents, the length of each video and visual content being less than a preset value. In the process of viewing short videos in a feed, a viewer watches short videos and visual contents pushed by the system. For example, when a user performs a gesture operation such as a swiping up and down operation, he/she may see short videos or visual contents of audio clips published through the preceding embodiment. The audio feed comprises multiple audios, wherein adjacent audios are, for example, works in a same album. Most audio works in audio feeds are longer than the media contents in short video feeds. The above embodiment can build a channel between a short video feed and an audio feed, attracting viewers to browse visual contents of audio clips by means of the short video feed characterized by information aggregation and high information density, and then guiding them to the audio feed. Therefore, it is convenient for users to switch between different types of media.

In some embodiments, a user can trigger the creation and publication of an audio clip by selecting a Create control. For example, an upload page is displayed in response to an operation on a Create control of the user, wherein the upload page comprises a Video Upload control and an Audio Upload control; an audio upload interface is displayed in response to a selection on the Audio Upload control of the user. Therefore, the user can upload the original audio file through the audio upload interface, wherein the uploading may comprise uploading locally or uploading from the network.

The Create tool in the above embodiment supports both publishing of videos and publishing of visual contents of audios. Therefore, the Create tool can be applied to a scenario where a video feed and an audio feed coexist, for example, a scenario where visual contents of audio clips are published in a short video feed.

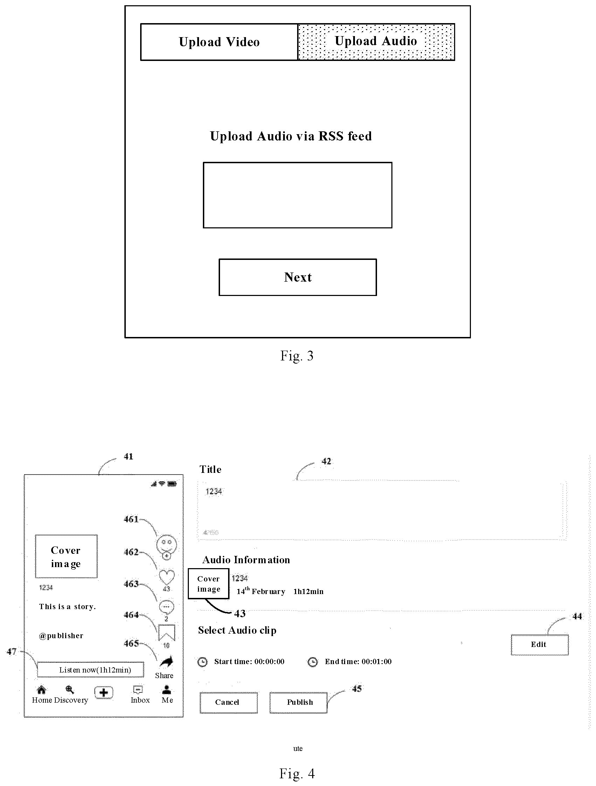

In some embodiments, the audio upload interface comprises an input box for an RSS feed link to obtain the original audio file through the RSS feed link. FIG. 3 shows a schematic diagram of an Upload page. FIG. 3 shows an audio upload interface displayed after a user selects the "Audio Upload" control. The user can input a RSS feed link in the input box "Upload Audio via RSS feed", and then click the "Next" button to continue the operation of creating an audio clip.

In some embodiments, an RSS feed link comprises multiple audios, such as multiple audio albums. In this case, a list of audio albums can be displayed for the creator to select a target audio album and a target audio as the original audio file.

At present, more audio creators record their audio works through RSS feeds. The above embodiment provides a way of uploading an original audio file through a RSS feed link, which expands the way of audio acquisition, thereby facilitating the operation of the creator.

In addition to acquiring the original audio file through a RSS feed, related information such as the title, cover image or text description and other description information of the original audio file can also be obtained. This information can be displayed in the Create interface of the audio clip, some or all of which can be edited by the user. In some embodiments, description information of the original audio file is obtained through a RSS feed link input by the user, wherein the original audio file is obtained through the RSS feed link; one or more input controls are displayed, each input control comprising the description information of the original audio file; and the visual content for the original audio file is generated according to the clipping information and the description information of the original audio file.

FIG. 4 shows a schematic diagram of a Create interface of an audio clip. As shown in FIG. 4, the Create interface comprises a preview window 41 for presenting the visual content for a current audio clip. On the right side of the preview window 41, there are an input control 42 for inputting a title, an input control 43 for inputting a cover image, an Edit control 44 for editing the audio clip, and a Publish control 45. The input control 42 reads a title "1234" obtained through the RSS feed link by default; the input control 43 reads the cover image of an album comprising the original audio file obtained through the RSS feed link by default; the Edit control 44 is used to trigger a Cut-out operation performed on the original audio file. After the user operates the Edit control 44, for example, the interface shown in FIG. 2 is displayed. If no editing operation is performed by the user, a preset part of the original audio file, such as the first 60 seconds, can be selected as the audio clip by default; the Publish control 45 is used to publish visual content for the audio clip into a feed after it is operated by the user.

In addition, the duration of the original audio file "1 hour and 12 minutes" and its text description "This is a story" are also incorporated in the playback interface of the visual content. For example, the duration of the original audio file is displayed on the Redirect-to control 47, so that the user can intuitively understand the information of the original audio file to be redirected to.

As required, an input control for inputting content such as text description can also be provided, so that the user can edit the description content. The cover image can be set to Not-editable to keep consistent with the cover image of the original audio file if desired. However, the present invention does not limit this.

In some embodiments, in the case where the description information comprises a cover image, a background color can be generated for the visual content based on the cover image. Thus, the background of the visual content that matches the color of other parts of the visual content can be automatically generated.

In some embodiments, an animation effect of the visual content is generated. Therefore, the visual content for the audio clip can have a presentation effect closer to that of a video. The animation effect can be selected from a library of effects, or automatically generated based on information about the audio clip.

In some embodiments, the animation effect is associated with a change in an audio attribute of the audio clip. Therefore, it is possible to render the animation effect based on the audio attribute. The audio attribute comprises, for example, at least one of rhythm, volume, or pitch of the audio. The animation effect comprises, for example, at least one of a deformation, a change in movement direction, trajectory or speed of a target object in the animation.

As required, a corresponding relationship between a category of the audio attribute and a category of the animation effect can be set, so that when a specific audio attribute changes, the animation can present a preset effect.

With this embodiment, a visual effect matching the auditory effect can be automatically produced.

In some embodiments, the visual content is also provided with user interaction controls. For example, in the preview interface shown in FIG. 4, user interaction controls 461 to 465 represent the publisher's homepage, likes, comments, favorites, and shares in sequence. These user interaction controls may be consistent with user interaction controls of other media contents (e.g., short video contents) in the feed. Thus, consistent visual experience can be guaranteed during the user's browsing process.

The above embodiment can realize automatic generation of the visual content for the audio clip without the need of the user to manually create the visual content, thus improving the generation efficiency of the visual content and facilitating the user to publish more audio clips in a feed, especially a short video feed.

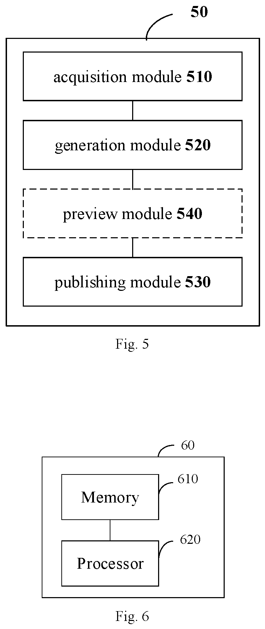

An embodiment of an audio publishing apparatus of the present invention will be described below with reference to FIG. 5.

FIG. 5 shows a schematic structural diagram of an audio publishing apparatus according to some embodiments of the present invention. As shown in FIG. 5, the audio publishing apparatus 50 of this embodiment comprises: an acquisition module 510, configured to acquire an original audio file; a generation module 520 configured to generate visual content for an audio clip corresponding to clipping information of the original audio file in response to the clipping information inputted by a user, wherein the visual content is provided with a Redirect-to control for redirecting to the original audio file; a publishing module 530, configured to publish the visual content for the audio clip into a feed in response to a publishing operation of the user.

Through the above embodiment, a creator can select and publish a part of the original audio file, for example, the most attractive and highlight part of the original audio file. Therefore, when a viewer browses the visual content corresponding to the audio clip, it is easier for the viewer to quickly understand the content of the complete original audio file, and can be redirected to a playback interface of the original audio file when interested. Therefore, the above embodiment provides an additional approach to audio access and playback, which can improve the information acquisition efficiency of visitors, and can increase the click-through rate of a creator's audio file. Moreover, the above embodiment can realize automatic generation of the visual content without the need of the user's complex video production operations, thereby improving the efficiency of publishing the user-created content, and having wide applicability.

In some embodiments, the audio publishing apparatus further comprises a preview module 540 configured to display a preview of the visual content for the audio clip before the publishing of the visual content for the audio clip.

In some embodiments, the visual content further comprises description information of the audio clip.

In some embodiments, the description information of the audio clip comprises at least one of a title, a cover image, or a text description.

In some embodiments, the generation module 520 is further configured to obtain description information of the original audio file through a RSS feed link input by the user, wherein the original audio file is obtained through the RSS feed link; display one or more input controls, each input control comprising the description information of the original audio file; and generate the visual content for the original audio file according to the clipping information and the description information of the original audio file.

In some embodiments, the generation module 520 is further configured to generate a background color for the visual content based on a cover image in the case that the description information comprises the cover image.

In some embodiments, the generation module 520 is further configured to generate an animation effect of the visual content.

In some embodiments, the animation effect is associated with a change in an audio attribute of the audio clip.

In some embodiments, the visual content is further provided with user interaction control(s).

In some embodiments, the acquisition module 510 is further configured to display an upload page in response to an operation on a Create control of the user, wherein the upload page comprises a Video Upload control and an Audio Upload control; display an audio upload interface in response to a selection on the Audio Upload control of the user; and acquire the original audio file through the upload interface.

In some embodiments, the audio upload interface comprises an input box for an RSS feed link, and the acquisition module 510 is further configured to acquire the original audio file through the RSS feed link.

In some embodiments, the publishing module 530 is further configured to publish the visual content for the audio clip into a short video feed; and the audio publishing method further comprises: publishing the original audio file into an audio feed.

In some embodiments, the generation module 520 is further configured to display an audio clip editing interface in response to the user starting to edit the audio clip, wherein the audio clip editing interface comprises a track area of the original audio file, a first movement control, and a second movement control, and the first movement control and the second movement control are respectively used to identify a start position and an end position of the audio clip in the track area; use playback time points corresponding to the first movement control and the second movement control as the clipping information of the original audio file in response to the user accomplishing editing the audio clip; and
generate the visual content for the audio clip according to the clipping information.

FIG. 6 shows a schematic structural diagram of an audio publishing apparatus according to other embodiments of the present invention. As shown in FIG. 6, the audio publishing apparatus 60 of this embodiment comprises: a memory 610 and a processor 620 coupled to the memory 610, the processor 620 configured to, based on instructions stored in the memory 610, carry out the audio publishing method according to any one of the foregoing embodiments.

The memory 610 may include, for example, system memory, a fixed non-volatile storage medium, or the like. The system memory stores, for example, an operating system, application programs, a boot loader (Boot Loader), and other programs.

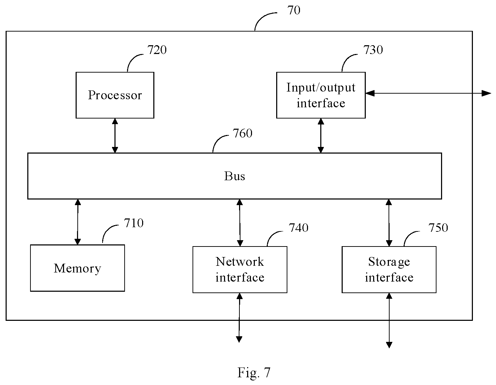

FIG. 7 shows a schematic structural diagram of an audio publishing apparatus according to still other embodiments of the present invention. As shown in FIG. 7, the audio publishing apparatus 70 of this embodiment comprises: a memory 710 and a processor 720, and may further comprise an input-output interface 730, a network interface 740, a storage interface 750, and the like. These interfaces 730, 740, 750, the memory 710 and the processor 720 may be connected through a bus 760, for example. The input-output interface 730 provides a connection interface for input-output devices such as a display, a mouse, a keyboard, and a touch screen. The network interface 740 provides a connection interface for various networked devices. The storage interface 750 provides a connection interface for external storage devices such as an SD card and a USB flash disk.

An embodiment of the present invention also provides a computer-readable storage medium on which a computer program is stored, which is characterized in that when the program is executed by a processor, any one of the foregoing audio publishing method is implemented.

One skilled in the art should understand that, the embodiments of this invention may be provided as a method, a system, or a computer program product. Therefore, embodiments of this invention can take the form of an entirely hardware embodiment, an entirely software embodiment or an embodiment containing both hardware and software elements. Moreover, the present invention may take the form of a computer program product embodied on one or more computer-usable non-transitory storage media (including but not limited to disk storage, CD-ROM, optical memory, etc.) having computer-usable program code embodied therein.

The present invention has been described with reference to flow charts and/or block diagrams of methods, apparatuses (systems) and computer program products according to embodiments of the present invention. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this invention, and is not limitation to this invention. Within spirit and principles of this utility model, any modification, replacement, improvement and etc. shall be contained in the protection scope of this invention.

## Claims

1. An audio publishing method, comprising:
acquiring an original audio file;
generating visual content for an audio clip corresponding to clipping information of the original audio file in response to the clipping information inputted by a user, wherein the visual content is provided with a Redirect-to control for redirecting to the original audio file; and
publishing the visual content for the audio clip into a feed in response to a publishing operation of the user.

2. The audio publishing method according to claim 1, further comprising:
displaying a preview of the visual content for the audio clip before the publishing of the visual content for the audio clip.

3. The audio publishing method according to claim 1 or 2, wherein the visual content further comprises description information of the audio clip.

4. The audio publishing method according to claim 3, wherein the description information of the audio clip comprises at least one of a title, a cover image, or a text description.

5. The audio publishing method according to claim 3 or 4, wherein generating visual content for an audio clip corresponding to clipping information comprises:
obtaining description information of the original audio file through a RSS feed link input by the user, wherein the original audio file is obtained through the RSS feed link;
displaying one or more input controls, each input control comprising the description information of the original audio file; and
generating the visual content for the original audio file according to the clipping information and the description information of the original audio file.

6. The audio publishing method according to any one of claims 3 to 5, wherein generating visual content for an audio clip corresponding to clipping information comprises:
generating a background color for the visual content based on a cover image in the case that the description information comprises the cover image.

7. The audio publishing method according to any one of claims 1 to 6, wherein generating visual content for an audio clip corresponding to clipping information comprises:
generating an animation effect of the visual content.

8. The audio publishing method according to claim 7, wherein the animation effect is associated with a change in an audio attribute of the audio clip.

9. The audio publishing method according to any one of claims 1 to 8, wherein the visual content is further provided with user interaction control(s).

10. The audio publishing method according to any one of claims 1 to 9, wherein acquiring an original audio file comprises:
displaying an upload page in response to an operation on a Create control of the user, wherein the upload page comprises a Video Upload control and an Audio Upload control;
displaying an audio upload interface in response to a selection on the Audio Upload control of the user; and
acquiring the original audio file through the upload interface.

11. The audio publishing method according to claim 10, wherein the audio upload interface comprises an input box for an RSS feed link to obtain the original audio file.

12. The audio publishing method according to any one of claims 1 to 11, wherein:
publishing the visual content for the audio clip into a feed comprises: publishing the visual content for the audio clip into a short video feed; and
the audio publishing method further comprises: publishing the original audio file into an audio feed.

13. The audio publishing method according to any one of claims 1 to 12, wherein generating visual content for an audio clip corresponding to clipping information of the original audio file in response to the clipping information is input by a user comprises:
displaying an audio clip editing interface in response to the user starting to edit the audio clip, wherein the audio clip editing interface comprises a track area of the original audio file, a first movement control, and a second movement control, and the first movement control and the second movement control are respectively used to identify a start position and an end position of the audio clip in the track area;
using playback time points corresponding to the first movement control and the second movement control as the clipping information of the original audio file in response to the user accomplishing editing the audio clip; and
generating the visual content for the audio clip according to the clipping information.

14. An audio publishing apparatus, comprising:
an acquisition module configured to acquire an original audio file;
a generation module configured to generate visual content for an audio clip corresponding to clipping information of the original audio file in response to the clipping information is input by a user, wherein the visual content is provided with a Redirect-to control for redirecting to the original audio file; and,
a publishing module configured to publish the visual content for the audio clip into a feed in response to a publishing operation of the user.

15. An audio publishing apparatus, comprising:
a memory; and
a processor coupled to the memory, the processor configured to, based on instructions stored in the memory, carry out the audio publishing method according to any one of claims 1 to 13.

16. A computer-readable storage medium on which a computer program is stored, which when executed by a processor implements the audio publishing method according to any one of claims 1 to 13.

17. A computer program product that when running on a computer causes the computer to implement the audio publishing method according to any one of claims 1 to 13.

18. A computer program, comprising:
instructions that, when executed by a processor, cause the processor to perform the audio publishing method according to any one of claims 1 to 13.
